# EUROPEAN PATENT APPLICATION

(11) **EP 1 319 375 A1**
(43) Date of publication of application: **18.06.2003**
(21) Application number: 01129240.6
(22) Date of filing: 11.12.2001
(51) Int. Cl.: A61C 13/30, A61C 8/00

(54) **Implant pin made of fibers for prosthodontic use, and stump reconstruction system**

(71) Applicant: Presta, Antonio, 48100 Ravenna (IT)
(72) Inventor: Presta, Antonio, 48100 Ravenna (IT)
(74) Representative: Modiano, Guido, Dr.-Ing.

(57) **Abstract**

An implant pin made of fibers for prosthodontic use, and a system for reconstructing the stump, characterized in that in order to obviate the excessive rigidity and consequent problems of metallic stump pins, an implant pin (1A, 1B, 1C, 1D, 2D) is used which is provided by embedding in a matrix of epoxy resins or other similar materials a bundle of fibers of carbon or Kevlar, quartz, glass or other suitable material, so that it can cushion mastication forces in a manner similar to the natural action of the alveolodental ligament.

## Description

The present invention relates to an implant pin for prosthodontic use and to the system for reconstructing the stump in an oral and extraoral environment.

In practice, the implant pin is a pin made of fibers and particularly suitable for reconstructing a stump on natural roots and on artificial roots constituted by hollow implant screws made of titanium or other biocompatible material.

Currently, artificial roots, known as intrabony implants or more simply as implants, are meant to receive so-called stump pins, which are made of metal by casting or by means of other known methods and are screwed or cemented in said implants and thus act as supports for dental prostheses.

Unfortunately, with such metallic stump pins, the stresses imparted to dental prostheses during mastication are transmitted to the implants with loads that are so highly concentrated and fatigue-inducing that over time they can crack or fracture said stump pins and even the implants or cause localized or generalized periimplant bone reabsorption.

Since the excessive rigidity and the consequent problems of any dental prosthesis with a metallic stump pin and an intrabony implant made of titanium or other biocompatible material have been ascertained, the aim of the present invention is to obviate the severe drawbacks described above, and to do so by means of interventions that are also easy to perform and provide results that are more reliable over time.

All this has been possible above all thanks to a particular innovative pin, which is certainly more elastic than known metal pins, since it is generally formed by fibers embedded in a matrix of epoxy resins or other similar materials and is therefore such as to avoid the described drawbacks by allowing to cushion mastication forces in a manner similar to what occurs naturally with the alveolodental ligament.

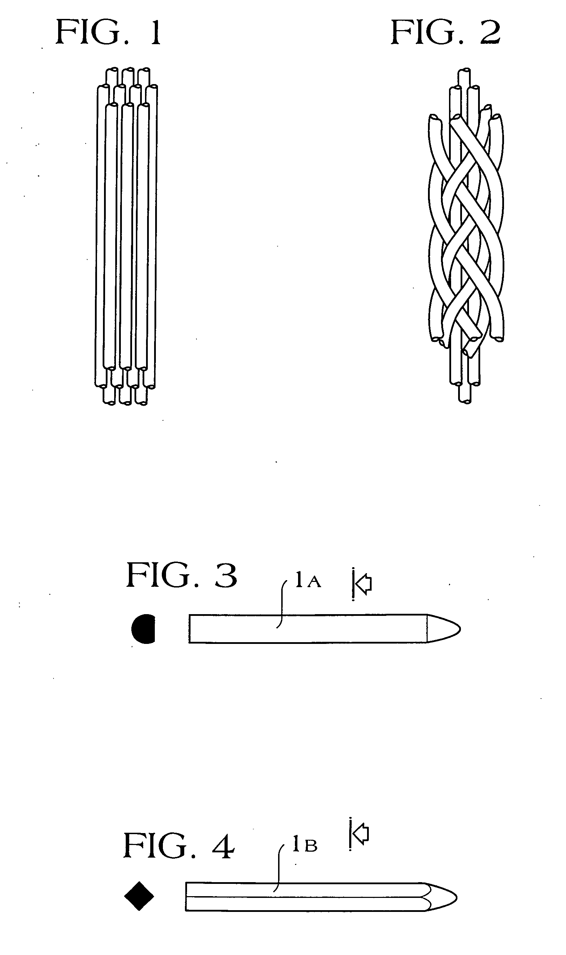

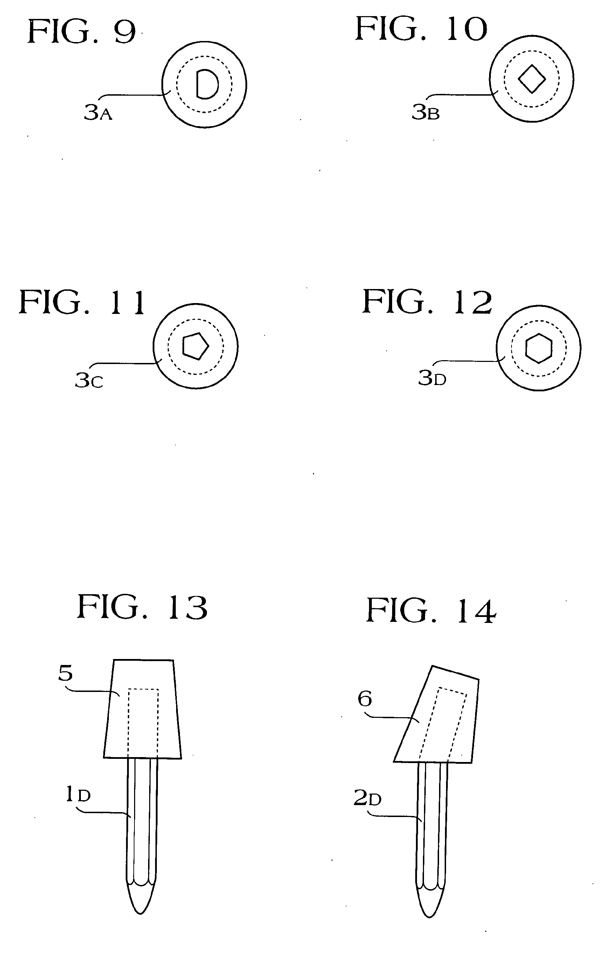

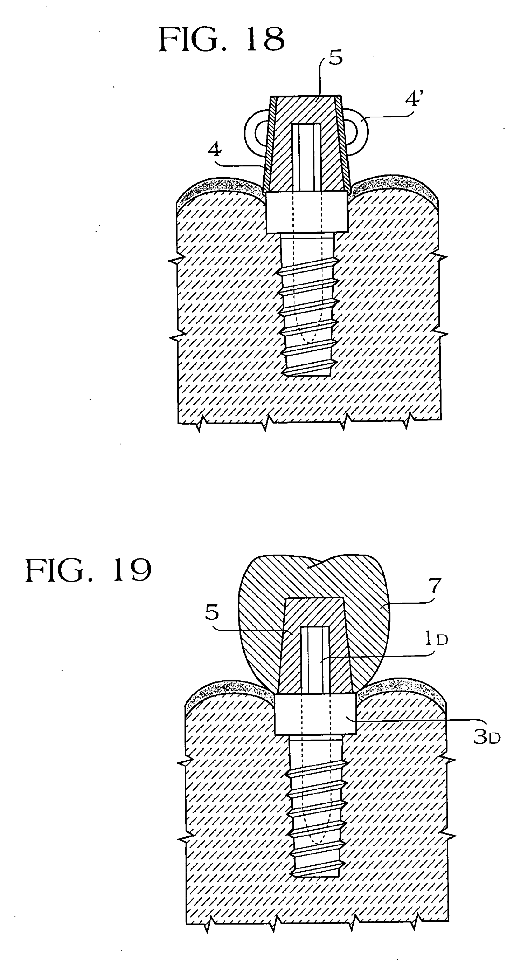

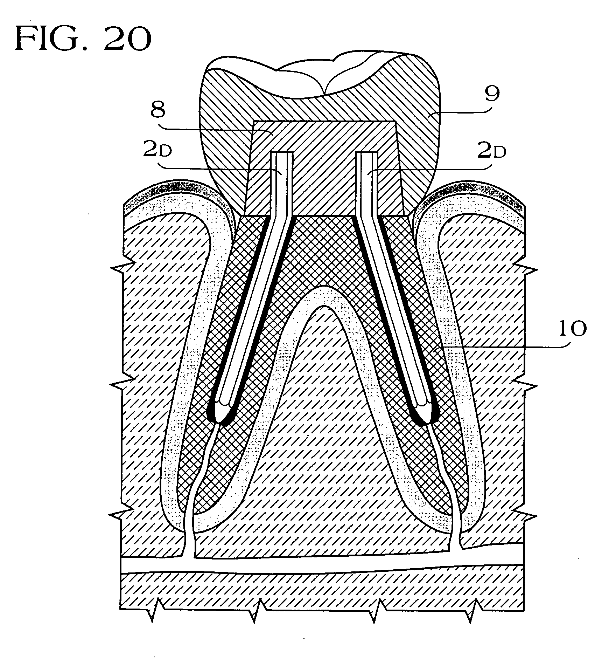

Such new invention is described hereinafter with the aid of three drawings, which illustrate only by way of non-limitative example:
Figures 1 and 2, which are highly enlarged-scale views of two different ways of structurally providing the implant pin by means of a different arrangement of the fibers to be embedded in the epoxy resin matrix;

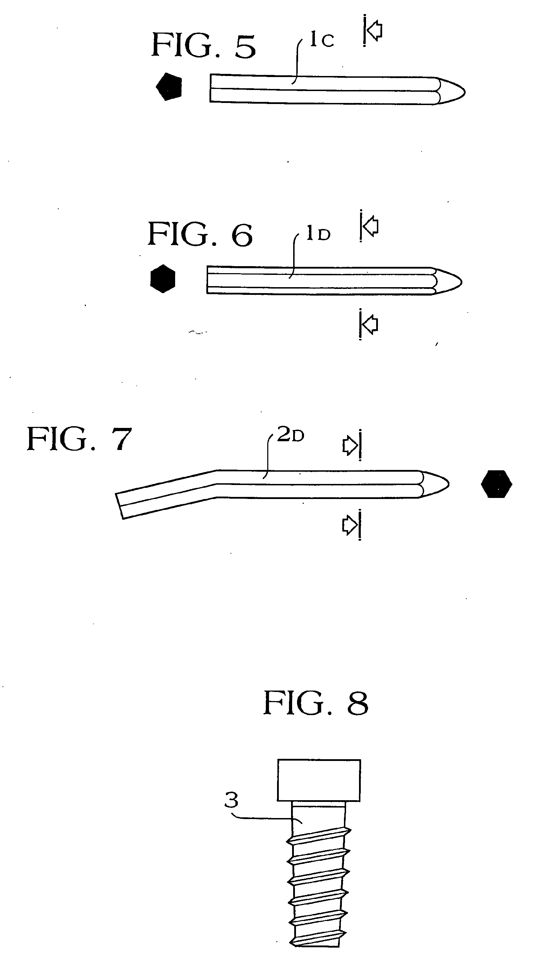

Figures 3, 4, 5 and 6, which are side and transverse sectional views, in a smaller scale than Figures 1 and 2 but still in enlarged scale with respect to the actual dimensions, of four straight implant pins;
Figure 7, which is a side view and a transverse sectional view of an angled implant pin;
Figure 8, which is a side view of a hollow artificial root or implant for straight or angled implant pins;
Figures 9, 10, 11, 12, which are top views of four hollow artificial roots or implants for a corresponding number of implant pins having a corresponding cross-section;
Figures 13 and 14, which are side views of two implant pins, a straight one and an angled one, complete with a straight stump for the former and an inclined stump for the latter;

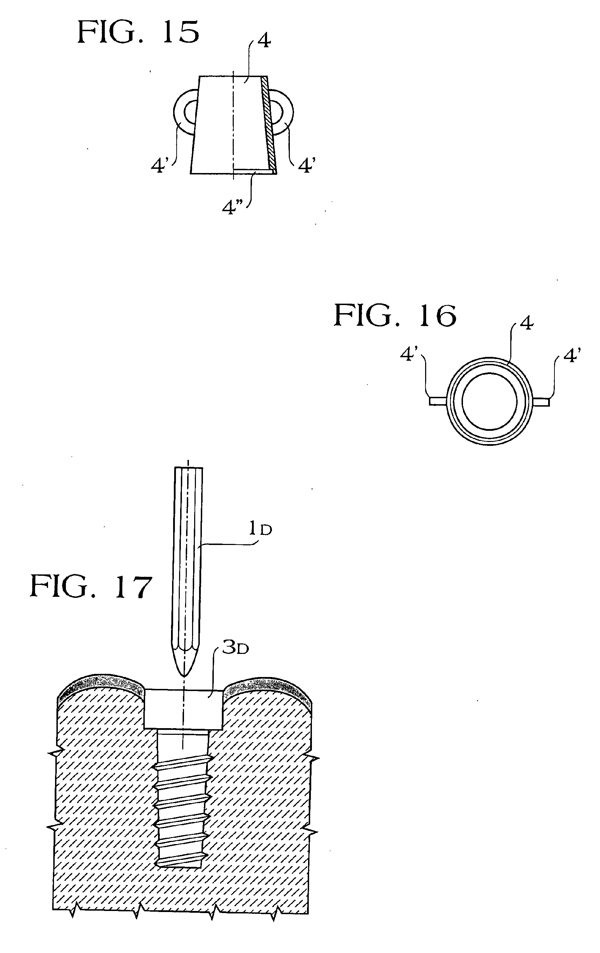

Figures 15 and 16, which are a side view and a bottom view of a frustum-shaped stump for forming a stump in an oral environment and as in Figure 18;
Figure 17, which is a view of the insertion of an implant pin in an implant that has already been screwed into the maxillary bone;
Figure 18, which is a view of the formation of a stump in an oral environment and by means of a bush, on the implant pin already fixed to the implant in the preceding step;
Figure 19, which is a sectional view of a prosthesis applied to the stump already provided in the preceding step;
Figure 20, which is a sectional view of the assembly formed by applying the prosthetic crown of a molar on a frustum-shaped stump provided, in an oral environment, by embedding therein the ends of two or more angled pins which protrude from a corresponding number of root canals of a natural root.
   The main characteristic of the implant pin according to the invention is that it is formed by embedding in an epoxy resin matrix a bundle of fibers of carbon or Kevlar, quartz, glass or other suitable material.
   Said bundle might be formed, as in Figure 1, only by fibers that are straight and parallel to the axis of the pin or, as in Figure 2, by means of a bundle of straight fibers that are parallel to the axis of the pin, which is entirely surrounded by a weave of other fibers arranged along mutually opposite helical paths.
   Regardless of whether the fibers are arranged according to one of the two illustrated examples or in any other suitable manner, the implant pins, whether straight as 1A-1B-1C and 1D or angled as 2D, all have a conical or ogive-like end in order to allow their easier insertion in roots, and can have cross-sections that differ from the ones shown in the accompanying drawings, which illustrate only by way of example four pins that have different cross-sections next to the corresponding hollow implant screws 3A-3B-3C and 3D meant for their insertion.
   In any case, it is preferable to avoid, in combination with hollow implantation screws 3, the use of implant pins that have a circular cross-section, since they would be exposed more easily to rotational movements with respect to said hollow screws 3.
   Said pins, as shown in Figure 20, can be inserted and cemented also in a natural root 10 after reaming the root canals, from which they protrude enough to be able to form, around them, the stump 8 made of composite material, onto which the prosthetic crown 9 is fixed by means of suitable adhesives once it has hardened and has been milled.
   Differently from what has been described above with reference to the convenience of avoiding the coupling of hollow screws 3 and implant pins having a circular cross-section, situations similar to the one shown in Figure 20, i.e., with two or more implant pins inserted in the same natural root and meant to be embedded in the same stump, prevent any possibility of rotation and therefore allow to utilize effectively even implant pins that have a circular cross-section, whether straight or angled.
   As shown by Figures 13 and 14, which illustrate the straight pin 1D and the angled pin 2D with the respective stumps 5 and 6 obtained by extraoral forming and with the aid of implant analogs on plaster models that reproduce the exact oral situation, said stumps, made of resin-based compounds of a known type and having a predominantly frustum-like shape, can have two parallel end faces, as in Figure 12, or two end faces that are mutually inclined, as in the example of Figure 13, in which case an angled implant pin 2D having a suitable angle is preferable.
   Any need for inclined stumps and corresponding angled implant pins arises from the irregular orientation of a root, whether natural or artificial. In such circumstances, the correct orientation of the prosthetic stump in fact seldom coincides with the orientation of the root or at least of the portion of implant pin inserted therein.
   In order to provide said stumps, whether frustum-shaped or having any other necessary shape, suitably shaped metal bushes 4 are used; said bushes, like the stumps to be formed, have two parallel or mutually inclined end faces. Further, especially if they are meant to form stumps in an oral environment, said bushes are provided with lugs 4' or other equivalent grip elements, by means of which they can be retained with a thread for safety.
   As shown in the drawings by means of the example of the bush 4, which in the specific case is frustum-shaped, the bushes according to the present invention, which may have any plan shape, and independently of the parallel or non-parallel arrangement of the two end faces, have, in their resting end face, which is generally the largest, a sort of perimetric abutment 4" for exact positioning against the artificial root (implant) on which the stump is to be provided. Accordingly, said artificial root, like 3D in Figure 19, is meant to protrude around the corresponding stump 5 with a sort of small step, which offers a further perimetric support to the prosthetic crown 7.
   Clearly, without altering the general characteristics that have been illustrated and described, the implant pin and the stump reconstruction system, which are both the subject of the present invention, may be susceptible of modifications and variations, which are in any case within the inventive concept.
   Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. An implant pin made of fibers for prosthodontic use, and a system for reconstructing the stump, **characterized in that** in order to obviate the excessive rigidity and consequent problems of metallic stump pins, an implant pin is used which is provided by embedding in a matrix of epoxy resins or other similar materials a bundle of fibers of carbon or Kevlar, quartz, glass or other suitable material, so that it can cushion mastication forces in a manner similar to the natural action of the alveolodental ligament.

2. The implant pin made of fibers for prosthodontic use, and the stump reconstruction system according to claim 1, **characterized in that** the bundle of fibers of carbon or other suitable material to be embedded in the matrix of epoxy resins or other similar materials can be formed entirely by straight fibers which are parallel to the axis of the pin.

3. The implant pin made of fibers for prosthodontic use, and the stump reconstruction system according to claim 1, **characterized in that** the fibers of carbon or other suitable material to be embedded in the matrix of epoxy resins or other similar materials in order to form the implant pin are arranged so that a bundle of said fibers, which are straight and parallel to the axis of the pivot, is entirely surrounded by a weave of other fibers arranged along mutually opposite helical paths.

4. The implant pin made of fibers for prosthodontic use, and the stump reconstruction system, according to the preceding claims, **characterized in that** independently of the arrangement of the fibers in the resin matrix the pin can be straight or angled.

5. The implant pin made of fibers for prosthodontic use, and the stump reconstruction system, according to the preceding claims, **characterized in that** one end of the pin, whether straight or angled, has a conical or ogive-shaped taper in order to facilitate its insertion in the cavity of the artificial root or in the canals of the natural root.

6. The implant pin made of fibers for prosthodontic use, and the stump reconstruction system, according to the preceding claims, **characterized in that** except for cases in which the stump is formed by embedding two or more implant pins, the cross-section of the pin, whether straight or angled, has any non-circular shape, in order to avoid rotational movements with respect to the hollow implantation screw in which it is inserted.

7. The implant pin made of fibers for prosthodontic use, and the stump reconstruction system, according to claim 6, **characterized in that** the artificial root or hollow implantation screw has a cavity shaped like the cross-section of the implantation pin to be inserted therein and to be fixed by means of suitable adhesive.

8. The implant pin made of fibers for prosthodontic use, and the stump reconstruction system, according to the preceding claims, **characterized in that** since the implant pin is meant to be embedded in the stump onto which the prosthesis is then fixed, a portion of said pin, whether straight or angled, protrudes from the artificial root in which it is inserted and protrudes into a particular metallic bush which rests thereon in order to act as a mold in forming said stump by filling with resin compounds of a known type.

9. The implant pin made of fibers for prosthodontic use, and the stump reconstruction system, according to claim 8, **characterized in that** the metallic bushes, and accordingly the stumps, which preferably but not exclusively have a frustum-like shape, can have two end faces which are mutually parallel or inclined, depending on whether the orientation of the stump and of the corresponding prosthesis coincides or not with the orientation of the portion of implant pin that is inserted in the artificial root or implant.

10. The implant pin made of fibers for prosthodontic use, and the stump reconstruction system, according to claims 8 and 9, **characterized in that** in the resting base or larger base of the bush (4) there is a sort of perimetric abutment (4"), which allows its exact positioning against the artificial root on which the stump is to be formed and determines, around said stump, the formation of a small step, which provides the prosthetic crown also with a perimetric surface for resting against said root.

11. The implant pin made of fibers for prosthodontic use, and the stump reconstruction system, according to claims 8, 9 and 10, **characterized in that** the bush (4), especially if meant to form stumps in an oral environment, is provided with lugs (4') or other equivalent grip elements by means of which it can be retained with a thread for safety.
